# FASCICULE DE BREVET EUROPEEN

(11) **EP 3 888 511 B1**
(45) Date de publication et mention de la délivrance du brevet: **09.08.2023**
(21) Numéro de dépôt: 21164095.8
(22) Date de dépôt: 22.03.2021
(51) Int. Cl.: A47J 45/07

(54) **POIGNÉE AMOVIBLE MUNIE D'UN VERROU MOBILE**
ABNEHMBARER GRIFF MIT MOBILER VERRIEGELUNG
DETACHABLE HANDLE EQUIPPED WITH A MOBILE LOCK

(30) Priorité: 30.03.2020 FR 2003105
(43) Date de publication de la demande: 06.10.2021
(73) Titulaire: SEB S.A., 69130 Ecully (FR)
(72) Inventeur: MONTGELARD, Michel, 73100 AIX-LES-BAINS (FR)
(74) Mandataire: SEB Développement

(56) Documents cités:
- EP-A2- 2 623 003
- EP-B1- 3 319 497
- WO-A1-2009/136678
- US-A- 3 203 029

## Description

La présente invention concerne une poignée amovible destinée à coopérer avec un récipient de cuisson, le récipient de cuisson tel une casserole, une poêle ou un fait-tout, ayant une paroi latérale qui est prolongée vers le haut par une portion recourbée vers l'extérieur.

Il est connu du document EP3319497 une poignée amovible destinée à coopérer avec un récipient de cuisson ayant une paroi latérale qui est prolongée vers le haut par une portion recourbée vers l'extérieur comportant une extrémité libre. La poignée amovible s'étend selon une direction longitudinale et comprend un organe d'appui interne et un organe d'appui externe destiné à venir contre, respectivement, une surface intérieure et une surface extérieure de la paroi latérale, ainsi qu'un organe d'appui supérieur destinés à venir contre l'extrémité libre de la portion recourbée. La poignée amovible comprend un verrou mobile en translation entre une position ouverte et une position fermée. Le verrou comporte une paroi de blocage destinée à être éloignée de l'organe d'appui interne dans la position ouverte du verrou et destinée à générer une force sur l'extrémité libre dans la position fermée du verrou, sous l'action d'un moyen de mise en pression. La force comporte une composante verticale de blocage de l'extrémité libre de la portion recourbée contre l'organe d'appui supérieur.

Ainsi, lorsque la poignée amovible est assemblée sur un récipient de cuisson, le verrou est dans la position fermée, la paroi latérale est maintenue entre les organes d'appui interne et externe et la portion recourbée est maintenue entre l'organe d'appui supérieur et la paroi de blocage.

Cependant, dans des cas d'utilisation particuliers, notamment lorsque l'utilisateur veut retourner les aliments contenus dans le récipient de cuisson et qu'il imprime avec la poignée amovible sur le récipient de cuisson un mouvement du bas vers le haut en freinant énergiquement le mouvement en fin de course, l'extrémité libre de la portion recourbée génère alors sur la paroi de blocage une force qui s'oppose à la force du moyen de mise en pression et qui a tendance à faire reculer le verrou.

Ainsi, l'utilisateur peut ressentir un déplacement parasite qui apparait entre la poignée amovible et le récipient de cuisson.

Le but de la présente invention est de remédier aux inconvénients précités et de proposer une poignée amovible destinée à coopérer avec un récipient de cuisson présentant un maintien amélioré pour permettre à l'utilisateur de la manipuler facilement, en toute sécurité.

Un autre but de la présente invention est de proposer une poignée amovible qui présente une conception simple et qui soit économique à mettre en oeuvre.

Ces buts sont atteints avec une poignée amovible destinée à coopérer avec un récipient de cuisson ayant une paroi latérale qui est prolongée vers le haut par une portion recourbée vers l'extérieur comportant une extrémité libre, ladite poignée amovible s'étendant selon une direction longitudinale et comprenant un organe d'appui interne et un organe d'appui externe destinés à venir contre, respectivement, une surface intérieure et une surface extérieure de la paroi latérale, ainsi qu'un organe d'appui supérieur destiné à venir contre l'extrémité libre de la portion recourbée, ladite poignée amovible comprenant un verrou mobile en translation entre une position ouverte et une position fermée, le verrou comportant une paroi de blocage destinée à être éloignée de l'organe d'appui interne dans la position ouverte du verrou et destinée à générer une force sur l'extrémité libre dans la position fermée du verrou, sous l'action d'un moyen de mise en pression, ladite force comportant une composante verticale F de blocage de l'extrémité libre de la portion recourbée contre l'organe d'appui supérieur caractérisée en ce que le verrou comporte un organe saillant et ladite poignée amovible comporte un organe en creux ou réciproquement et en ce que, dans la position fermée, l'organe saillant et l'organe en creux sont engagés l'un dans l'autre pour empêcher le recul du verrou lorsque l'extrémité libre génère sur la paroi de blocage une force comportant une composante F1 opposée à la composante verticale F de blocage et dont l'intensité est supérieure à une valeur prédéterminée.

Ainsi, dans le cas de fortes sollicitations de l'extrémité libre sur la paroi de blocage, le verrou est bloqué en position fermée et ne peut plus reculer. En conséquence, les mouvements relatifs entre la poignée amovible et le récipient de cuisson sont réduits et ceci permet d'améliorer la sécurité et la qualité perçue par l'utilisateur.

Par composante verticale de blocage, on comprend que la composante est perpendiculaire à la direction longitudinale qui est sensiblement horizontale.

De manière avantageuse, l'organe saillant et l'organe en creux se désengagent l'un de l'autre automatiquement lorsque le verrou quitte la position fermée pour passer en position ouverte.

Avantageusement, l'organe saillant et l'organe en creux s'étendent dans un plan vertical, parallèle à la direction longitudinale en l'organe saillant ou l'organe en creux est mobile selon une direction verticale perpendiculaire à la direction longitudinale entre une position de blocage dans laquelle le verrou ne peut reculer et une position de déblocage dans laquelle le verrou peut reculer.

Ainsi, lorsque l'extrémité libre génère sur la paroi de blocage une force comportant une composante F1 opposée à la composante verticale F de blocage, l'organe saillant est déplacé dans l'organe en creux selon la direction de la composante verticale F de blocage.

De préférence, l'organe saillant est agencé à proximité de la paroi de blocage.

Le verrou est guidé dans la poignée amovible avec un jeu de fonctionnement dimensionné pour autoriser en position fermée un déplacement de la paroi de blocage vers le bas, et par conséquent un déplacement de l'organe saillant dans l'organe en creux.

De manière avantageuse, la valeur prédéterminée de l'intensité de la composante F1 est supérieure à 0,05 fois l'intensité de la composante verticale F mesurée dans la position fermée du verrou.

Ainsi, l'organe saillant ou l'organe en creux passe dans la position de blocage dans laquelle le verrou ne peut reculer dès que la paroi de blocage agit sur l'extrémité libre sous l'action du moyen de mise en pression. Par exemple, la valeur prédéterminée de l'intensité de la composante F1 est supérieure à 1 N.

Avantageusement, l'organe en creux est agencé sur une agrafe solidaire de la poignée amovible, ladite agrafe comportant l'organe d'appui supérieur.

Ainsi, l'agrafe et le verrou peuvent être réalisé en un matériau métallique résistant et la poignée amovible peut comporter un corps en matière plastique, plus économique qu'un matériau métallique.

De préférence, l'organe saillant comporte au moins une dent et l'organe en creux comporte au moins un logement de réception de forme complémentaire à l'au moins une dent.

Une telle collaboration d'une dent et d'un logement de réception de forme complémentaire permet un blocage efficace du verrou en position fermée.

De manière avantageuse, l'au moins une dent comporte une face plane inclinée d'un angle β par rapport à une direction verticale perpendiculaire à la direction longitudinale, l'angle β étant supérieur à 15° et l'au moins un logement comporte une face plane de même inclinaison.

Ainsi, l'au moins une dent peut sortir de l'au moins un logement sans coincer lorsque le verrou quitte la position fermée.

De préférence, la poignée amovible comporte un moyen de rappel du verrou en position ouverte disposé entre l'agrafe et le verrou.

Une telle disposition permet notamment d'aider l'organe saillant ou l'organe en creux de passer de la position de blocage à la position de déblocage.

Avantageusement, l'organe saillant comporte une pluralité de dents formant au moins une première crémaillère et l'organe en creux comporte une pluralité de logements de réception formant au moins une deuxième crémaillère, la première crémaillère et la deuxième crémaillère comportant un même pas P.

Ainsi, plusieurs dents et plusieurs logements peuvent participer au blocage du verrou en position fermée.

De manière avantageuse, le pas P est inférieur à 2 millimètres.

De préférence, l'au moins une première crémaillère comporte une première crémaillère droite et une première crémaillère gauche et l'au moins une deuxième crémaillère comporte une deuxième crémaillère droite et une deuxième crémaillère gauche, les premières crémaillères droite et gauche et les deuxièmes crémaillères droite et gauche comportant un même pas P.

Avantageusement, la première crémaillère droite et la première crémaillère gauche s'étendent parallèlement à la direction longitudinale en étant décalées d'un demi pas ou la deuxième crémaillère droite et la deuxième crémaillère gauche s'étendent parallèlement à la direction longitudinale en étant décalées d'un demi pas.

Ainsi, le verrou dans la position fermée peut avoir une mobilité avant blocage d'au maximum une distance égale à un demi pas, soit avec une collaboration de la première crémaillère droite avec la deuxième crémaillère droite ou soit avec une collaboration de la première crémaillère gauche avec la deuxième crémaillère gauche.

De préférence, le verrou est mobile en translation selon la direction longitudinale et la paroi de blocage est inclinée pour former avec la direction longitudinale, dans un plan de coupe vertical comprenant la direction longitudinale, un angle α supérieur à 45°.

Ainsi, l'extrémité libre génère sur la paroi de blocage et réciproquement une force comportant une composante verticale de blocage sensiblement perpendiculaire à la direction longitudinale.

De manière avantageuse, la paroi de blocage est destinée à coopérer avec une arête inférieure de l'extrémité libre dans la position fermée du verrou.

Par arête inférieure de l'extrémité libre, on comprend une ligne d'intersection d'une surface extérieure de la portion recourbée prolongeant la surface extérieure de la paroi latérale et d'une surface sensiblement verticale, décalée d'une valeur donnée vers l'extérieur de la paroi.

De manière avantageuse, l'organe d'appui supérieur comporte une face d'appui destinée à coopérer avec une arête supérieure de l'extrémité libre de la portion recourbée.

Par arête supérieure de l'extrémité libre, on comprend une ligne d'intersection d'une surface intérieure de la portion recourbée prolongeant la surface intérieure de la paroi latérale et d'une surface sensiblement verticale, décalée d'une valeur donnée vers l'extérieur de la paroi.

Les arrêtes inférieure et supérieure délimitent l'épaisseur de l'extrémité libre de la portion recourbée.

Par une face d'appui destinée à coopérer avec une arête supérieure, on comprend que lorsque la poignée amovible est assemblée sur le récipient de cuisson, dans un plan de coupe vertical, la face d'appui empêche un déplacement de l'arête supérieure selon une direction comportant une composante verticale, vers le haut, et une composante horizontale, radiale externe au récipient de cuisson.

De préférence, les moyens de mise en pression comportent un ressort de compression et la poussée du ressort sur le verrou s'effectue selon la direction longitudinale lorsque le verrou est en position fermée.

Cette disposition permet d'adapter la position du verrou à l'épaisseur et à la longueur de l'extrémité libre.

Avantageusement, la poignée amovible comporte des moyens de manoeuvre du verrou à genouillère, lesdits moyens de manoeuvre comportant un levier, une bielle et le ressort de compression.

Cette disposition permet d'obtenir des moyens de manoeuvre du verrou très ergonomiques.

De manière avantageuse, le verrou est mobile par rapport aux organes d'appui interne, d'appui externe et d'appui supérieur qui sont les trois solidaires et fixes.

L'invention concerne également un ensemble formé par au moins un récipient de cuisson comportant une paroi latérale qui est prolongée vers le haut par une portion recourbée vers l'extérieur comportant une extrémité libre munie d'une arête supérieure et d'une arête inférieure et une poignée amovible telle que précédemment décrite.

L'invention sera mieux comprise à l'étude du mode de réalisation pris à titre nullement limitatif et illustré dans les figures annexées dans lesquelles :
[Fig. 1] La figure 1 illustre une vue en perspective d'une poignée amovible agencée sur un récipient de cuisson selon un mode particulier de réalisation de l'invention,
[Fig. 2] La figure 2 illustre une vue en coupe de la poignée amovible suivant le plan de coupe vertical médian II-II de la figure 1.
[Fig. 3] La figure 3 illustre une vue en coupe de la poignée amovible suivant le plan de coupe vertical médian II-II de la figure 1, le verrou étant en position ouverte.
[Fig. 4] La figure 4 illustre une vue en coupe de la poignée amovible suivant le plan de coupe vertical VI-VI, décalé du plan de coupe vertical médian II-II de la figure 1.
[Fig. 5] La figure 5 illustre une vue en perspective selon une direction V de la poignée amovible illustrée sur la figure 1 sans le corps et sans le récipient de cuisson.
[Fig. 6] La figure 6 illustre une vue en perspective selon une direction VI du verrou et de l'agrafe de la poignée amovible illustrée sur la figure 5.
[Fig. 7] La figure 7 illustre une vue en perspective éclatée du verrou et de l'agrafe de la poignée amovible illustrée sur la figure 6.

On notera que, dans ce document, les termes «horizontal», «vertical», «inférieur», «supérieur», «longitudinal», «transversal», «haut», «bas», employés pour décrire la poignée amovible et le récipient de cuisson font référence à cette poignée amovible en situation d'usage, lorsqu'elle est montée sur une paroi latérale du récipient de cuisson, lequel est posé sur un plan horizontal.

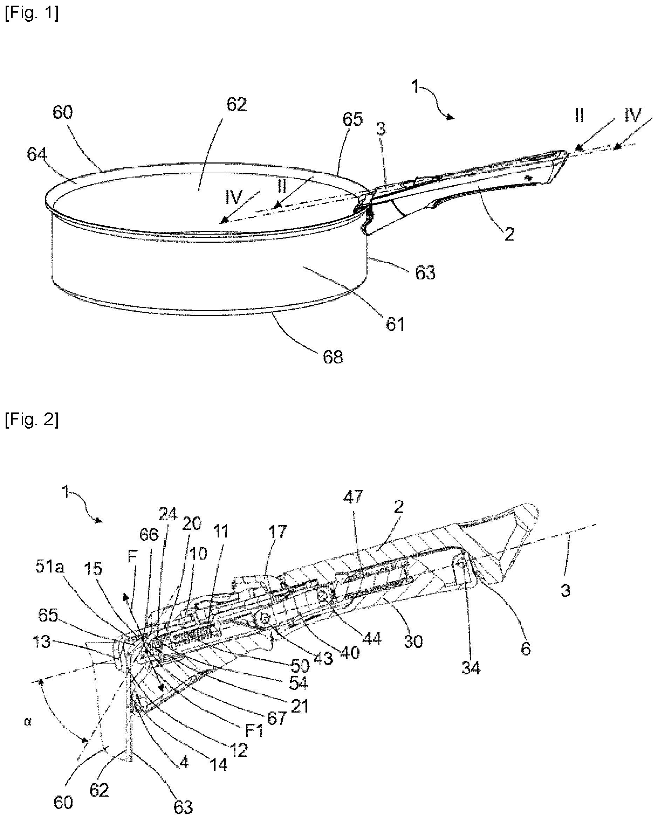

Tel que visible aux figures 1 à 3, une poignée amovible 1 est destinée à coopérer avec un récipient de cuisson 60 qui comprend une paroi de fond 68 horizontale, une paroi latérale 61 se dressant depuis la paroi de fond 68, et une portion recourbée 64 qui s'étend vers l'extérieur. La paroi latérale 61 comporte une surface intérieure 62 et une surface extérieure 63. La portion recourbée 64 prolonge la paroi latérale 61 et délimite l'ouverture supérieure du récipient de cuisson 60. La portion recourbée 64 comprend une extrémité libre 65 munie d'une arête supérieure 66 et d'une arête inférieure 67. Les arêtes supérieure 66 et inférieure 67 sont de préférence superposées dans un plan vertical.

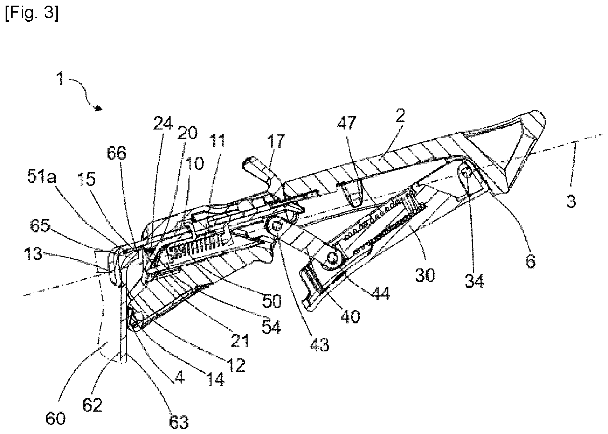

La poignée amovible 1 s'étend selon une direction longitudinale 3. La poignée amovible 1 comporte un corps de préhension 2 qui comprend à une extrémité avant dirigée vers le récipient de cuisson 60 une paroi avant 4 formant un organe d'appui externe 14 destiné à coopérer avec la surface extérieure 63 de la paroi latérale 61. Dans un plan de coupe vertical orienté selon la direction longitudinale 3 (Fig. 2 et 3), l'organe d'appui externe 14 est sensiblement vertical. La poignée amovible 1 comporte un plan médian vertical qui s'étend le long de la direction longitudinale 3 et qui forme un plan de symétrie pour la poignée amovible 1.

La poignée amovible 1 comporte une agrafe 50 qui est réalisée en matériau métallique. L'agrafe 50 comprend deux pattes agencées de part et d'autre d'un plan médian vertical. Les deux pattes 51a, 51b forment un organe d'appui supérieur 15 destinée à coopérer avec l'arête supérieure 66 de l'extrémité libre 65. Les deux pattes 51a, 51b s'étendent le long de la direction longitudinale 3, au niveau de l'extrémité avant.

La poignée amovible 1 comporte une pièce de structure 10 qui est réalisée en matériau métallique. La pièce de structure 10 est sensiblement plane et comporte une patte d'extrémité 13. La patte d'extrémité 13 s'étend vers le bas et comporte une paroi interne formant un organe d'appui interne 12 destiné à coopérer avec la surface intérieure 62 de la paroi latérale 61.

L'organe d'appui interne 12 et l'organe d'appui externe 14 sont décalées selon la direction longitudinale 3 (Fig.3) pour permettre l'introduction de la paroi latérale 61 et de l'extrémité libre 65 lors de l'assemblage de la poignée amovible 1 sur le récipient de cuisson 60.

La poignée amovible 1 comporte un organe de verrouillage formé par un verrou 20 mobile en translation selon la direction longitudinale 3 entre une position ouverte (Fig.3) et une position fermée (Fig.2). Le verrou 20 comporte une portion centrale 22 sensiblement plane qui s'étend selon la direction longitudinale 3. L'agrafe 50 est fixée sous la pièce de structure 10 pour définir un logement 23 de réception et de guidage en translation de la portion centrale 22 du verrou 20. Le verrou 20 comporte à une extrémité avant une paroi de blocage 21.

Tel que visible à la figure 3, dans la position ouverte du verrou 20, la paroi de blocage 21 est destinée à être éloignée de l'organe d'appui supérieur 15 pour permettre l'introduction de la paroi latérale 61 entre les organes d'appui interne 12 et externe 14 et permettre à l'arête supérieure 66 de l'extrémité libre 65 de venir contre l'organe d'appui supérieur 15.

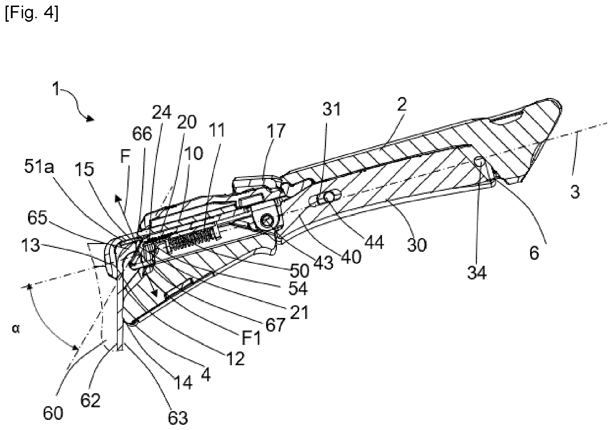

Tel que visible aux figures 2 et 4, dans la position fermée du verrou 20, la paroi de blocage 21 est destinée à prendre appui contre l'arête inférieure 67 de l'extrémité libre 65 et ainsi bloquer l'arête supérieure 66 contre l'organe d'appui supérieur 15. Dans un plan de coupe vertical comprenant la direction longitudinale 3, une droite appartenant à la paroi de blocage 21 et la direction longitudinale forment un angle α compris entre 40 et 50°, de préférence 45°.

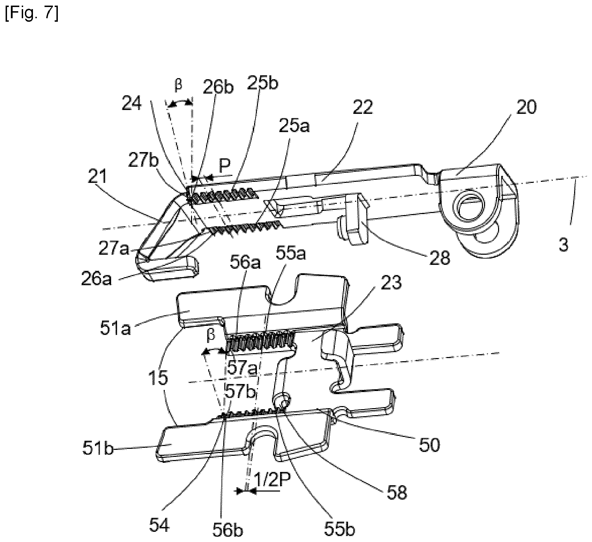

Conformément à la figure 7, le verrou 20 comporte un organe saillant 24 formé par une pluralité de dents 26a d'une première crémaillère droite 25a et une pluralité de dents 26b d'une première crémaillère gauche 25b. La première crémaillère droite 25a et la première crémaillère gauche 25b sont agencées au voisinage de la paroi de blocage 21. La première crémaillère droite 25a et la première crémaillère gauche 25b s'étendent le long de la direction longitudinale 3 et sont agencées de part et d'autre du plan médian vertical. La pluralité de dents 26a de la première crémaillère droite 25a et la pluralité de dents 26b de la première crémaillère gauche 25b présentent un même pas P égal à 1,3 millimètres. La première crémaillère droite 25a et la première crémaillère gauche 25b s'étendent parallèlement à la direction longitudinale 3 en étant décalées d'un demi pas. Chaque dent 26a de la première crémaillère droite 25a et chaque dent 26b de la première crémaillère gauche 25b s'étendent vers le bas selon une direction perpendiculaire à la direction longitudinale 3. Chaque dent 26a de la première crémaillère droite 25a et chaque dent 26b de la première crémaillère gauche 25b comportent une face plane 27a, 27b inclinée d'un angle β égal à 20° par rapport à une direction verticale perpendiculaire à la direction longitudinale 3.

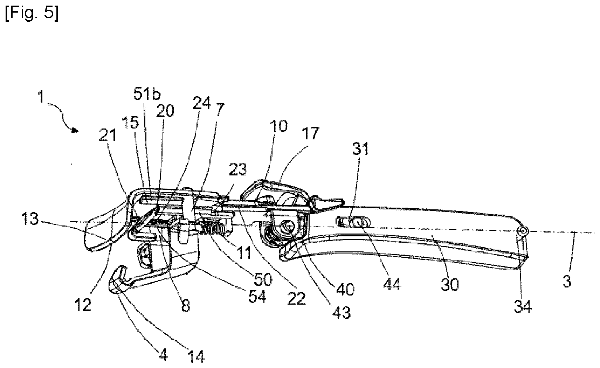

L'agrafe 50 est solidaire de la pièce de structure 10 qui est elle-même solidaire du corps de préhension 2 et de la paroi avant 4 par l'intermédiaire de deux vis 7, 8 (Fig.5). L'agrafe 50 comporte un organe en creux 54 formé par une pluralité de logements 56a définissant une deuxième crémaillère droite 55a et une pluralité de logements 56b définissant une deuxième crémaillère gauche 55b. La deuxième crémaillère droite 55a et la deuxième crémaillère gauche 55b s'étendent le long de la direction longitudinale 3 et sont agencées de part et d'autre du plan médian vertical. La pluralité de logements 56a de la deuxième crémaillère droite 55a et la pluralité de logements 56b de la deuxième crémaillère gauche 55b présentent un même pas P égal à 1,3 millimètres. La deuxième crémaillère droite 55a et la deuxième crémaillère gauche 55b s'étendent parallèlement à la direction longitudinale 3 en étant décalées d'un demi pas P.

Chaque logement 56a de la deuxième crémaillère droite 55a et chaque logement 56b de la deuxième crémaillère gauche 55b s'étendent vers le haut selon une direction perpendiculaire à la direction longitudinale 3. Chaque logement 56a de la deuxième crémaillère droite 55a et chaque logement 56b de la deuxième crémaillère gauche 55b comportent une face plane 57a, 57b inclinée d'un angle β égal à 20° par rapport à une direction verticale perpendiculaire à la direction longitudinale 3.

Dans la position fermée du verrou 20, l'organe saillant 24 et l'organe en creux 54 sont engagés l'un dans l'autre pour empêcher le recul du verrou 20 lorsque l'extrémité libre 65 génère sur la paroi de blocage 21 une force comportant une composante F1 verticale, orienté vers le bas et dont l'intensité est supérieure à une valeur prédéterminée égale à 0,05 fois l'intensité de la composante verticale F mesurée dans la position fermée du verrou 20 qui est égale à environ 25 N, soit 1,25 N. Par l'intensité de la composante verticale F mesurée dans la position fermée du verrou 20, on comprend que la mesure de l'intensité de la composante verticale F est réalisée avec comme unique sollicitation l'action d'un moyen de mise en pression 47. La portion centrale 22 du verrou 20 est guidée en translation dans le logement 23 avec un jeu vertical dimensionné pour permettre à l'organe saillant de se déplacer dans l'organe en creux ou d'en sortir.

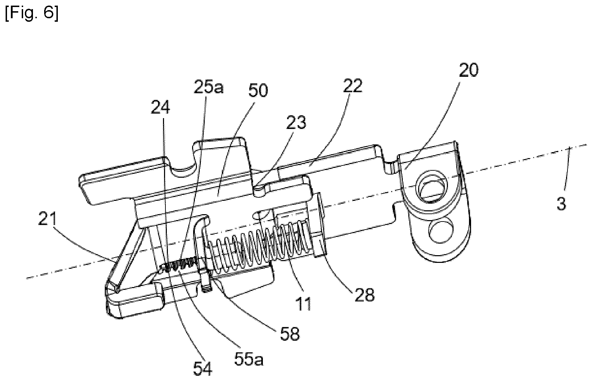

Tel que visible aux figures 5 et 6, la poignée amovible 1 comporte un moyen de rappel du verrou 20 disposé entre une patte 58 portée par l'agrafe 50 et une butée 28 portée par le verrou 20. Le moyen de rappel est formé par un ressort 11 qui travaille en compression lorsque le verrou 20 est en position fermée et qui est adapté à appliquer une force de rappel sur la butée 28 pour entraîner le verrou 20 vers sa position ouverte.

Conformément aux figures 2 et 3, La poignée amovible 1 comporte des moyens de déplacement de l'organe de verrouillage formés par le verrou 20. Les moyens de déplacement comportent un levier 30 qui est monté pivotant sur le corps de préhension 2 selon un axe de pivotement 34 s'étendant selon une direction transversale, perpendiculaire à la direction longitudinale 3, et une bielle 40 qui permet le déplacement du verrou 20 quand le levier 30 est pivoté. La bielle 40 est montée de façon pivotante, par une première extrémité au verrou 20 selon un axe 43, et par une seconde extrémité au levier 30 selon un axe 44 qui est monté coulissant dans une ouverture oblongue 31 réalisée dans le levier 30 (Fig.5).

Le levier 30 est disposé sur une face inférieure 6 du corps de préhension 2 et est mobile entre une position de fermeture et une position d'ouverture en passant par une position intermédiaire d'équilibre instable. Dans la position de fermeture du levier 30, le verrou 20 est en position fermée et dans la position d'ouverture du levier 30, le verrou 20 est dans la position ouverte. En outre, les moyens de déplacement comprennent également un ressort 47 qui est disposé entre l'axe 44 monté coulissant et une paroi transversale 32 du levier 30. Ce ressort 47 de compression permet un ajustement de la position du verrou 20 en position fermée à l'épaisseur de la paroi latérale 61 du récipient de cuisson 60.

Conformément à la figure 2, dans la position de fermeture du levier 30, l'axe 44 autour duquel la seconde extrémité 42 pivote est situé au-dessus d'une ligne passant par l'axe de pivotement 34 et l'axe 43. La seconde extrémité 42 est maintenue en contact de la pièce de structure 10 sous l'action du ressort 47 de compression. Ainsi, le verrou 20 reste naturellement dans sa position fermée, sans que l'utilisateur ait à maintenir un quelconque effort sur la poignée amovible 1. La position intermédiaire d'équilibre instable du levier 30 est atteinte lorsque l'axe 44 autour duquel la seconde extrémité 42 pivote, est déplacé sous la ligne passant par l'axe de pivotement 34 et l'axe 43.

Tel que visible sur les figures 1 à 5, la poignée amovible 1 comprend un bouton d'ouverture 17 qui permet de faire passer le levier 30 initialement dans sa position de fermeture au-delà de sa position intermédiaire d'équilibre instable. Le bouton d'ouverture 17 est agencé sur une face supérieure du corps de préhension 2. Le bouton d'ouverture 17 est mobile en rotation autour d'un axe transversal, horizontal à la direction longitudinale 3 de la poignée amovible 1. Le bouton d'ouverture 17 est mobile entre une position abaissée de repos dans laquelle le levier 30 est dans sa position de fermeture, une position relevée intermédiaire dans laquelle le levier est dans sa position intermédiaire d'équilibre instable et une position relevée dans laquelle le levier 30 est dans sa position d'ouverture.

En fonctionnement, pour désassembler la poignée amovible 1 du récipient de cuisson 60, l'utilisateur saisit le corps de préhension 2 et fait pivoter avec le pouce le bouton d'ouverture 17 de la position abaissée de repos dans laquelle le levier 30 est dans sa position de fermeture à la position relevée dans laquelle le levier 30 est dans sa position d'ouverture. Le passage du levier 30 de sa position de fermeture à sa position d'ouverture provoque par l'intermédiaire de la bielle 40 le déplacement du verrou 20 de sa position fermée à sa position ouverte.

Pour assembler la poignée amovible 1 sur le récipient de cuisson 60, l'utilisateur saisit le corps de préhension 2 et suivant le même mode opératoire que celui décrit ci-dessus amène le verrou 20 dans sa position ouverte. Il introduit l'extrémité libre 65 de la portion recourbée 64 entre l'organe d'appui interne 12 et l'organe d'appui externe 14 pour amener la surface intérieure 62 de la paroi latérale 61 contre l'organe d'appui interne 12 et la surface extérieure 63 contre l'organe d'appui externe 14, et également amener l'arête supérieure 66 contre les deux pattes 51a, 51b. Ensuite, il appuie sur le levier 30 pour le faire passer de sa position d'ouverture à sa position de fermeture et ainsi entrainer le verrou 20 de sa position ouverte vers sa position fermée. La paroi de blocage 21 prend alors appui contre l'arête inférieure 67 de l'extrémité libre 65 et ainsi bloque l'arête supérieure 66 contre les deux pattes 51a, 51b. L'extrémité libre 65 de la portion recourbée 64 génère alors sur la paroi de blocage 21 une force qui comporte une composante F1 opposée à la composante verticale F de blocage, orientée vers le bas, qui déplace la paroi de blocage 21 vers le bas. Au moins une des dents 26a, 26b de la première crémaillère droite 25a ou de la première crémaillère gauche 26a est engagée dans un des logements 56a, 56b de la deuxième crémaillère droite 55a ou de la deuxième crémaillère gauche 55b et le verrou 20 passe dans la position fermée. En utilisation particulière, notamment lorsque l'utilisateur veut retourner les aliments contenus dans le récipient de cuisson 60, par exemple pour retourner des crêpes, et qu'il imprime avec la poignée amovible 1 sur le récipient de cuisson 60 un mouvement du bas vers le haut en freinant énergiquement le mouvement en fin de course, le verrou 20 ne peut pas reculer.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, dans la position fermée, le verrou 20 est mobile entre une position fermée débloquée dans laquelle l'organe saillant 24 et l'organe en creux 54 sont dégagés l'un de l'autre et une position fermée bloquée dans laquelle l'organe saillant 24 et l'organe en creux 54 sont engagés l'un dans l'autre pour empêcher le recul du verrou 20 lorsque l'extrémité libre 65 génère sur la paroi de blocage 21 une force comportant une composante F1 opposée à la composante verticale F de blocage et dont l'intensité est supérieure à l'intensité de la composante verticale F mesurée dans la position fermée du verrou 20. Dans le cas de fortes sollicitations de l'extrémité libre 65 sur la paroi de blocage 21, le verrou 20 passe dans la position fermée bloquée.

## Revendications

1. Poignée amovible (1) destinée à coopérer avec un récipient de cuisson (60) ayant une paroi latérale (61) qui est prolongée vers le haut par une portion recourbée (64) vers l'extérieur comportant une extrémité libre (65), ladite poignée amovible (1) s'étendant selon une direction longitudinale (3) et comprenant un organe d'appui interne (12) et un organe d'appui externe (14) destiné à venir contre, respectivement, une surface intérieure (62) et une surface extérieure (63) de la paroi latérale (61), ainsi qu'un organe d'appui supérieur (15) destinés à venir contre l'extrémité libre (65) de la portion recourbée (64), ladite poignée amovible (1) comprenant un verrou (20) mobile en translation entre une position ouverte et une position fermée, le verrou (20) comportant une paroi de blocage (21) destinée à être éloignée de l'organe d'appui interne (12) dans la position ouverte du verrou et destinée à générer une force sur l'extrémité libre (65) dans la position fermée du verrou (20), sous l'action d'un moyen de mise en pression (47), ladite force comportant une composante verticale F de blocage de l'extrémité libre (65) de la portion recourbée (64) contre l'organe d'appui supérieur (15), ladite composante verticale F de blocage étant perpendiculaire à la direction longitudinale qui est sensiblement horizontale, **caractérisée en ce que** le verrou (20) comporte un organe saillant (24) et ladite poignée amovible (1) comporte un organe en creux (54) ou réciproquement, et **en ce que** dans la position fermée, l'organe saillant (24) et l'organe en creux (54) sont engagés l'un dans l'autre pour empêcher le recul du verrou (20) lorsque l'extrémité libre (65) génère sur la paroi de blocage (21) une force comportant une composante F1 opposée à la composante verticale F de blocage et dont l'intensité est supérieure à une valeur prédéterminée.

2. Poignée amovible (1) selon la revendication 1, **caractérisée en ce que** l'organe saillant (24) et l'organe en creux (54) s'étendent dans un plan vertical, parallèle à la direction longitudinale (3) et **en ce que** l'organe saillant (24) ou l'organe en creux (54) est mobile selon une direction verticale perpendiculaire à la direction longitudinale, entre une position de blocage dans laquelle le verrou ne peut reculer et une position de déblocage dans laquelle le verrou peut reculer.

3. Poignée amovible (1) selon l'une quelconque des revendications 1 à 2, **caractérisée en ce que** l'organe saillant (24) est agencé à proximité de la paroi de blocage (21).

4. Poignée amovible (1) selon l'une quelconque des revendications 1 à 3, **caractérisée en ce que** l'organe saillant (24) comporte au moins une dent (26a, 26b) et l'organe en creux (54) comporte au moins un logement (56a, 56b) de réception de forme complémentaire à l'au moins une dent (26a, 26b).

5. Poignée amovible (1) selon la revendication 4, **caractérisée en ce que** l'au moins une dent (26a, 26b) comporte une face plane (27a, 27b) inclinée d'un angle β par rapport à une direction verticale perpendiculaire à la direction longitudinale, l'angle β étant supérieur à 15° et **en ce que** l'au moins un logement (56a, 56b) comporte une face plane (57a, 57b) de même inclinaison.

6. Poignée amovible (1) l'une quelconque des revendications 1 à 5, **caractérisée en ce que** l'organe saillant (24) comporte une pluralité de dents (26a, 26b) formant au moins une première crémaillère (25a, 25b) et l'organe en creux (54) comporte une pluralité de logements (56a, 56b) de réception formant au moins une deuxième crémaillère (55a, 55b), la première crémaillère (25a, 26a) et la deuxième crémaillère (55a, 55b) comportant un même pas P.

7. Poignée amovible (1) selon la revendication 6, **caractérisée en ce que** l'au moins une première crémaillère (25a, 25b) comporte une première crémaillère droite (25a) et une première crémaillère gauche (25b) et **en ce que** l'au moins une deuxième crémaillère (55a, 55b) comporte une deuxième crémaillère droite (55a) et une deuxième crémaillère gauche (55b), les premières crémaillères droite (25a) et gauche (25b) et les deuxièmes crémaillères droite (55a) et gauche (55b) comportant un même pas P.

8. Poignée amovible (1) selon la revendication 7, **caractérisée en ce que** la première crémaillère droite (25a) et la première crémaillère gauche (25b) s'étendent parallèlement à la direction longitudinale (3) en étant décalées d'un demi pas ou **en ce que** la deuxième crémaillère droite (55a) et la deuxième crémaillère gauche (55b) s'étendent parallèlement à la direction longitudinale (3) en étant décalées d'un demi pas P.

9. Poignée amovible (1) selon l'une quelconque des revendications 1 à 8, **caractérisée en ce que** le verrou (20) est mobile en translation selon la direction longitudinale (3) et **en ce que** la paroi de blocage (21) est inclinée pour former avec la direction longitudinale dans un plan de coupe vertical comprenant la direction longitudinale (3), un angle α supérieur à 45°.

10. Poignée amovible (1) selon l'une quelconque des revendications 1 à 9, **caractérisée en ce que** les moyens de mise en pression comportent un ressort (47) de compression et **en ce que** la poussée du ressort (47) sur le verrou (20) s'effectue selon la direction longitudinale (3) lorsque le verrou (20) est en position fermé.

11. Poignée amovible (1) selon la revendication 10, **caractérisée en ce qu'**elle comporte des moyens de manoeuvre du verrou (20) à genouillère, lesdits moyens de manoeuvre comportant un levier (30), une bielle (40) et le ressort (47) de compression.

12. Ensemble formé par au moins un récipient de cuisson (60) comportant une paroi latérale (61) qui est prolongée vers le haut par une portion recourbée (64) vers l'extérieur comportant une extrémité libre (65) munie d'une arête supérieure (66) et d'une arête inférieure (67) et une poignée amovible (1) selon l'une quelconque des revendications 1 à 11.

## Patentansprüche

1. Abnehmbarer Griff (1), der dazu vorgesehen ist, mit einem Kochbehälter (60) zusammenzuwirken, der eine Seitenwand (61) aufweist, die durch einen nach außen gekrümmten Abschnitt (64) nach oben verlängert ist, umfassend ein freies Ende (65), wobei der abnehmbare Griff (1) sich in einer Längsrichtung (3) erstreckt und ein inneres Auflageorgan (12) und ein äußeres Auflageorgan (14) umfasst, die dazu vorgesehen sind, an einer Innenfläche (62) bzw. einer Außenfläche (63) der Seitenwand (61) anzuliegen, sowie ein oberes Auflageorgan (15), das dazu vorgesehen ist, am freien Ende (65) des gekrümmten Abschnitts (64) anzuliegen, wobei der abnehmbare Griff (1) eine zwischen einer offenen Position und einer geschlossenen Position translatorisch mobile Verriegelung (20) umfasst, wobei die Verriegelung (20) eine Arretierungswand (21) umfasst, die dazu vorgesehen ist, in der offenen Position der Verrieglung vom inneren Auflageorgan (12) entfernt zu sein, und dazu vorgesehen ist, unter der Einwirkung eines Druckbeaufschlagungsmittels (47) in der geschlossenen Position der Verriegelung (20) eine Kraft auf das freie Ende (65) zu erzeugen, wobei die Kraft eine vertikale Komponente F zur Arretierung des freien Endes (65) des gekrümmten Abschnitts (64) gegen das obere Auflageorgan (15) umfasst, wobei die vertikale Komponente F zur Arretierung senkrecht zur Längsrichtung ist, die im Wesentlichen horizontal ist, **dadurch gekennzeichnet, dass** die Verriegelung (20) ein hervorstehendes Organ (24) umfasst und der abnehmbare Griff (1) ein vertieftes Organ (54) umfasst oder umgekehrt, und dadurch, dass das hervorstehende Organ (24) und das vertiefte Organ (54) in der geschlossenen Position ineinander eingreifen, um die Rückbewegung der Verriegelung (20) zu verhindern, wenn das freie Ende (65) auf die Arretierungswand (21) eine Kraft erzeugt, die eine Komponente F1 umfasst, die der vertikalen Komponente F zur Arretierung entgegengesetzt ist und deren Stärke größer als ein vorbestimmter Wert ist.

2. Abnehmbarer Griff (1) nach Anspruch 1, **dadurch gekennzeichnet, dass** das hervorstehende Organ (24) und das vertiefte Organ (54) sich in einer vertikalen Ebene parallel zur Längsrichtung (3) erstrecken, und dadurch, dass das hervorstehende Organ (24) oder das vertiefte Organ (54) in einer vertikalen Richtung senkrecht zur Längsrichtung zwischen einer Arretierungsposition, bei der die Verriegelung sich nicht zurückbewegen kann, und einer Freigabeposition, bei der die Verriegelung sich zurückbewegen kann, mobil ist.

3. Abnehmbarer Griff (1) nach einem der Ansprüche 1 bis 2, **dadurch gekennzeichnet, dass** das hervorstehende Organ (24) in der Nähe der Arretierungswand (21) eingerichtet ist.

4. Abnehmbarer Griff (1) nach einem der Ansprüche 1 bis 3, **dadurch gekennzeichnet, dass** das hervorstehende Organ (24) mindestens einen Zahn (26a, 26b) umfasst und das vertiefte Organ (54) mindestens einen Aufnahmesitz (56a, 56b) mit einer zu dem mindestens einen Zahn (26a, 26b) komplementären Form umfasst.

5. Abnehmbarer Griff (1) nach Anspruch 4, **dadurch gekennzeichnet, dass** der mindestens eine Zahn (26a, 26b) eine ebene Seite (27a, 27b) umfasst, die in Bezug auf eine vertikale Richtung senkrecht zur Längsrichtung um einen Winkel β geneigt ist, wobei der Winkel β größer als 15° ist, und dadurch, dass der mindestens eine Sitz (56a, 56b) eine ebene Seite (57a, 57b) mit einer gleichen Neigung umfasst.

6. Abnehmbarer Griff (1) nach einem der Ansprüche 1 bis 5, **dadurch gekennzeichnet, dass** das hervorstehende Organ (24) eine Vielzahl von Zähnen (26a, 26b) umfasst, die mindestens eine erste Zahnleiste (25a, 25b) bilden, und das vertiefte Organ (54) eine Vielzahl von Sitzen (56a, 56b) umfasst, die mindestens eine zweite Zahnleiste (55a, 55b) bilden, wobei die erste Zahnleiste (25a, 26a) und die zweite Zahnleiste (55a, 55b) eine gleiche Teilung P umfassen.

7. Abnehmbarer Griff (1) nach Anspruch 6, **dadurch gekennzeichnet, dass** die mindestens eine erste Zahnleiste (25a, 25b) eine erste rechte Zahnleiste (25a) und eine erste linke Zahnleiste (25b) umfasst, und dadurch, dass die mindestens eine zweite Zahnleiste (55a, 55b) eine zweite rechte Zahnleiste (55a) und ein zweite linke Zahnleiste (55b) umfasst, wobei die erste rechte (25a) und linke (25b) Zahnleiste und die zweite rechte (55a) und linke (55b) Zahnleiste eine gleiche Teilung P umfassen.

8. Abnehmbarer Griff (1) nach Anspruch 7, **dadurch gekennzeichnet, dass** die erste rechte Zahnleiste (25a) und die erste linke Zahnleiste (25b) sich parallel zur Längsrichtung (3) erstrecken und um eine halbe Teilung versetzt sind, oder dadurch, dass die zweite rechte Zahnleiste (55a) und die zweite linke Zahnleiste (55b) sich parallel zur Längsrichtung (3) erstrecken und um eine halbe Teilung versetzt sind.

9. Abnehmbarer Griff (1) nach einem der Ansprüche 1 bis 8, **dadurch gekennzeichnet, dass** die Verriegelung (20) in der Längsrichtung (3) translatorisch mobil ist und dadurch, dass die Arretierungswand (21) geneigt ist, um mit der Längsrichtung in einer vertikalen Schnittebene, die die Längsrichtung (3) umfasst, einen Winkel größer als 45° zu bilden.

10. Abnehmbarer Griff (1) nach einem der Ansprüche 1 bis 9, **dadurch gekennzeichnet, dass** die Druckbeaufschlagungsmittel eine Druckfeder (47) umfassen und dadurch, dass das Drücken der Feder (47) auf die Verriegelung (20) in der Längsrichtung (3) erfolgt, wenn die Verriegelung (20) in der geschlossenen Position ist.

11. Abnehmbarer Griff (1) nach Anspruch 10, **dadurch gekennzeichnet, dass** er Griffhandhabungsmittel (20) mit Kniehebel umfasst, wobei die Handhabungsmittel einen Hebel (30), ein Pleuel (40) und die Druckfeder (47) umfassen.

12. Montage, die aus mindestens einem Kochbehälter (60) gebildet ist, der eine Seitenwand (61) umfasst, die durch einen nach außen gekrümmten Abschnitt (64) nach oben verlängert ist, umfassend ein freies Ende (65), das mit einer oberen Kante (66) und einer unteren Kante (67) und einem abnehmbaren Griff (1) nach einem der Ansprüche 1 bis 11 versehen ist.

## Claims

1. Detachable handle (1) intended to engage with a cooking vessel (60) having a side wall (61) which is extended upwards by a curved portion (64) outwards comprising a free end (65), said detachable handle (1) extending in a longitudinal direction (3) and comprising an internal bearing member (12) and an external bearing member (14) intended to come against, respectively, an inner surface (62) and an outer surface (63) of the side wall (61), as well as an upper bearing member (15) intended to come against the free end (65) of the curved portion (64), said detachable handle (1) comprising a lock (20) which is mobile in translation between an open position and a closed position, the lock (20) comprising a blocking wall (21) intended to be extended from the internal bearing member (12) in the open position of the lock and intended to generate a force on the free end (65) in the closed position of the lock (20), under the action of a pressurising means (47), said force comprising a vertical component F for blocking the free end (65) of the curved portion (64) against the upper bearing member (15), said vertical blocking component F being perpendicular to the longitudinal direction which is substantially horizontal, **characterised in that** the lock (20) comprising a projecting member (24) and said detachable handle (1) comprises a hollow member (54) or reciprocally, and **in that** in the closed position, the projecting member (24) and the hollow member (54) are engaged in one another to prevent the recoil of the lock (20) when the free end (65) generates a force on the blocking wall (21), comprising a component F1 opposite the vertical blocking component F, and the intensity of which is greater than a predetermined value.

2. Detachable handle (1) according to claim 1, **characterised in that** the projecting member (24) and the hollow member (54) extend in a vertical plane, parallel to the longitudinal direction (3), and **in that** the projecting member (24) or the hollow member (54) is mobile in a vertical direction perpendicular to the longitudinal direction, between a blocking position, wherein the lock cannot recoil and an unblocking position, wherein the lock can recoil.

3. Detachable handle (1) according to any one of claims 1 to 2, **characterised in that** the projecting member (24) is arranged in the proximity of the blocking wall (21).

4. Detachable handle (1) according to any one of claims 1 to 3, **characterised in that** the projecting member (24) comprises at least one tooth (26a, 26b) and the hollow member (54) comprises at least one complementarily-shaped housing (56a, 56b) for receiving the at least one tooth (26a, 26b).

5. Detachable handle (1) according to claim 4, **characterised in that** the at least one tooth (26a, 26b) comprises a flat face (27a, 27b) inclined by an angle β with respect to a vertical direction perpendicular to the longitudinal direction, the angle β being greater than 15° and **in that** the at least one housing (56a, 56b) comprises a flat face (57a, 57b) of the same inclination.

6. Detachable handle (1) according to any one of claims 1 to 5, **characterised in that** the projecting member (24) comprises a plurality of teeth (26a, 26b) forming at least one first rack (25a, 25b) and the hollow member (54) comprises a plurality of receiving housings (56a, 56b) forming at least one second rack (55a, 55b), the first rack (25a, 26a) and the second rack (55a, 55b) comprising one same step P.

7. Detachable handle (1) according to claim 6, **characterised in that** the at least one first rack (25a, 25b) comprises a first right rack (25a) and a first left rack (25b) and **in that** the at least one second rack (55a, 55b) comprises a second right rack (55a) and a second left rack (55b), the first right (25a) and left (25b) racks and the second right (55a) and left (55b) racks comprising one same step P.

8. Detachable handle (1) according to claim 7, **characterised in that** the first right rack (25a) and the first left rack (25b) extend parallel to the longitudinal direction (3) by being offset by a half-step or **in that** the second right rack (55a) and the second left rack (55b) extend parallel to the longitudinal direction (3) by being offset by a half-step P.

9. Detachable handle (1) according to any one of claims 1 to 8, **characterised in that** the lock (20) is mobile in translation in the longitudinal direction (3) and **in that** the blocking wall (21) is inclined to form with the longitudinal direction in a vertical cutting plane comprising the longitudinal direction (3), an angle a greater than 45°.

10. Detachable handle (1) according to any one of claims 1 to 9, **characterised in that** the pressurising means comprise a compression spring (47) and **in that** the thrust of the spring (47) on the lock (20) is done in the longitudinal direction (3) when the lock (20) is in the closed position.

11. Detachable handle (1) according to claim 10, **characterised in that** it comprises means for manoeuvring the toggle-type lock (20), said manoeuvring means comprising a lever (30), a connecting rod (40) and the compression spring (47).

12. Assembly formed by at least one cooking vessel (60) comprising a side wall (61) which is extended upwards by a curved portion (64) outwards comprising a free end (65) provided with an upper ridge (66) and a lower ridge (67) and a detachable handle (1) according to any one of claims 1 to 11.
